# EUROPEAN PATENT APPLICATION

(11) **EP 4 318 155 A1**
(43) Date of publication of application: **07.02.2024**
(21) Application number: 22780122.2
(22) Date of filing: 16.03.2022
(51) Int. Cl.: G05B 23/02

(54) **DISPLAY DEVICE, CONTROL DEVICE, CONTROL METHOD, AND PROGRAM**

(30) Priority: 30.03.2021 JP 2021056946
(71) Applicant: Sumitomo Heavy Industries, Ltd., Tokyo 141-6025 (JP)
(72) Inventor: KADOWAKI, Masanori, Yokosuka-shi, Kanagawa 237-8555 (JP); AKEDO, Yutaka, Yokosuka-shi, Kanagawa 237-8555 (JP)
(74) Representative: Louis Pöhlau Lohrentz
(86) International application number: PCT/JP2022/011970
(87) International publication number: WO 2022/209902

(57) **Abstract**

An information processing device includes a data acquisition unit that acquires process data of target equipment, a first index value calculation unit that calculates a first index value related to operation of the target equipment based on the process data, a second index value calculation unit that calculates a second index value related to the operation of the target equipment based on the process data, and a display control unit that displays a coordinate space defined by an axis denoting the first index value and by an axis denoting the second index value and a representative point of the process data in the coordinate space on a display unit.

## Description

### Technical Field

The present invention relates to a display device, a control device, a control method, and a program for displaying an index related to operation of target equipment.

### Background Art

In the related art, a sensor has been provided in target equipment such as a plant to monitor an operating status of the target equipment through a measurement value of the sensor. For example, PTL 1 discloses a graph that has a vertical axis denoting an abnormality degree indicating a degree of abnormality in power equipment and that has a horizontal axis denoting a time t in an abnormality diagnosis device that performs abnormality diagnosis of the power equipment. Furthermore, PTL 1 discloses adding a reliability degree of determination of the abnormality degree to the graph.

### Citation List

### Patent Literature

[PTL 1] Japanese Unexamined Patent Publication No. 2020-30125

### Summary of Invention

### Technical Problem

An operator who operates the target equipment operates the target equipment based on information obtained from, for example, the above graph disclosed in PTL 1. However, for example, in a case where there are a plurality of index values related to operation such as the abnormality degree and the reliability degree, an actual degree of abnormality or a level of necessity for dealing with abnormality varies depending on a level of the reliability degree even in a case where the abnormality degree is high. Accordingly, in operating the target equipment, it is required to make a decision by considering individual index values such as the abnormality degree and the reliability degree together.

Therefore, an object of the present invention is to provide a display device, a control device, a control method, and a program that can make it easy to check a plurality of index values related to operation of target equipment.

### Solution to Problem

In order to solve the problem, an information processing device of an aspect of the present invention includes a data acquisition unit that acquires process data of target equipment, a first index value calculation unit that calculates a first index value related to operation of the target equipment based on the process data, a second index value calculation unit that calculates a second index value related to the operation of the target equipment based on the process data, and a display control unit that displays a coordinate space defined by an axis denoting the first index value and by an axis denoting the second index value and a representative point of the process data in the coordinate space on a display unit.

According to the aspect, the representative point of the process data is displayed in the coordinate space defined by the axis denoting the first index value related to the operation of the target equipment calculated based on the process data and by the axis denoting the second index value related to the operation of the target equipment calculated based on the process data. Thus, since an operator can check magnitude of the first index value and the second index value of the process data at once, a plurality of index values are easily checked.

A display device of another aspect of the present invention displays a coordinate space defined by an axis denoting a first index value related to operation of target equipment calculated based on process data of the target equipment and by an axis denoting a first index value related to the operation of the target equipment calculated based on the process data of the target equipment, and a representative point of the process data in the coordinate space.

According to the aspect, the representative point of the process data is displayed in the coordinate space defined by the axis denoting the first index value related to the operation of the target equipment calculated based on the process data and by the axis denoting the second index value related to the operation of the target equipment calculated based on the process data. Thus, since the operator can check the magnitude of the first index value and the second index value of the process data at once, a plurality of index values are easily checked.

An information processing method of still another aspect of the present invention includes, via an information processing device, acquiring process data of target equipment, calculating a first index value related to operation of the target equipment based on the process data, calculating a second index value related to the operation of the target equipment based on the process data, and displaying a coordinate space defined by an axis denoting the first index value and by an axis denoting the second index value and a representative point of the process data in the coordinate space on a display unit.

According to the aspect, the representative point of the process data is displayed in the coordinate space defined by the axis denoting the first index value related to the operation of the target equipment calculated based on the process data and by the axis denoting the second index value related to the operation of the target equipment calculated based on the process data. Thus, since the operator can check the magnitude of the first index value and the second index value of the process data at once, a plurality of index values are easily checked.

A program of still another aspect of the present invention causes an information processing device to function as a data acquisition unit that acquires process data of target equipment, a first index value calculation unit that calculates a first index value related to operation of the target equipment based on the process data, a second index value calculation unit that calculates a second index value related to the operation of the target equipment based on the process data, and a display control unit that displays a coordinate space defined by an axis denoting the first index value and by an axis denoting the second index value and a representative point of the process data in the coordinate space on a display unit.

According to the aspect, the representative point of the process data is displayed in the coordinate space defined by the axis denoting the first index value related to the operation of the target equipment calculated based on the process data and by the axis denoting the second index value related to the operation of the target equipment calculated based on the process data. Thus, since the operator can check the magnitude of the first index value and the second index value of the process data at once, a plurality of index values are easily checked.

Any combinations of the above components, and substitution of the components and expressions of the present invention with each other among a method, a device, a system, a computer program, a data structure, a recording medium, and the like are also valid as an aspect of the present invention.

### Advantageous Effects of Invention

According to the present invention, a plurality of index values related to operation of target equipment are easily checked.

### Brief Description of Drawings

Fig. 1 is a schematic diagram illustrating an overall configuration of a plant according to the present embodiment.
Fig. 2 is a diagram illustrating functional blocks of a system 30 according to the present embodiment.
Fig. 3 is a diagram illustrating a physical configuration of the system 30 according to the present embodiment.
Fig. 4 is a flowchart illustrating an example of operation processing of the system 30 according to the present embodiment.
Fig. 5 is a diagram illustrating an example of a screen displayed on a display device 32 according to the present embodiment.
Fig. 6 is a diagram illustrating another example of the screen displayed on the display device 32 according to the present embodiment.
Fig. 7 is a diagram illustrating still another example of the screen displayed on the display device 32 according to the present embodiment.

### Description of Embodiments

Hereinafter, the present invention will be described through an embodiment of the invention with reference to the drawings. It should be noted that the following embodiment does not limit the invention according to the claims. In addition, not all combinations of features described in the embodiment are essential to the solution of the invention. The same or equivalent components, members, and processing illustrated in each drawing will be designated by the same reference signs, and description will not be repeated as appropriate.

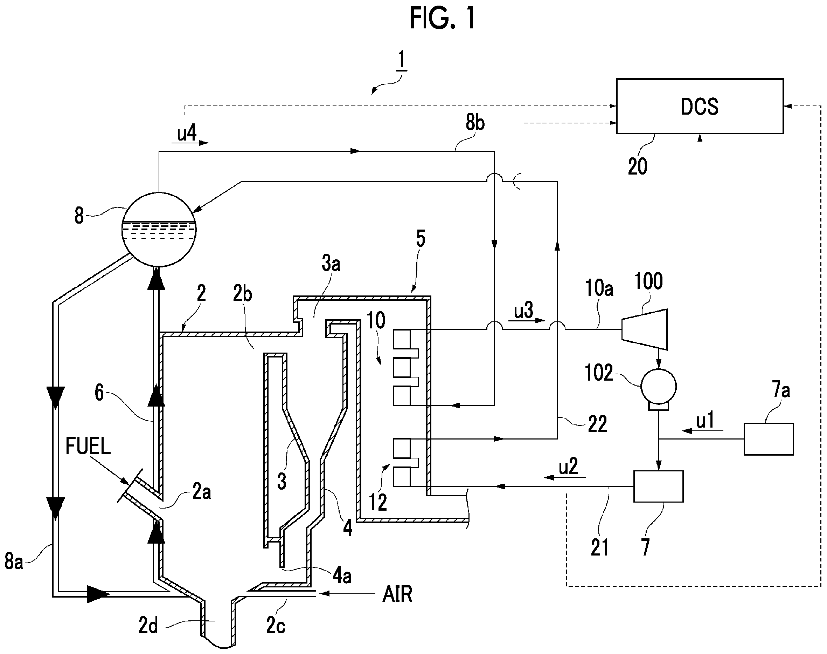

Fig. 1 is a schematic diagram illustrating an overall configuration of a plant according to the present embodiment. First, a configuration of a plant 1 targeted by the present embodiment will be described using Fig. 1. For example, the plant 1 is a power generation plant (incineration plant) including a circulating fluidized bed boiler (circulating fluidized bed type), and includes a boiler that generates vapor by combusting fuel while circulating a circulation material such as silica sand that is fluidized at a high temperature. As the fuel of the plant 1, not only fossil fuel such as coal but also, for example, non-fossil fuel (woody biomass, waste tires, waste plastic, sludge, or the like) can be used. The vapor generated in the plant 1 is used for driving a turbine 100. The plant targeted by the present embodiment is not limited to a power generation plant or an incineration plant including a boiler and may be a plant such as a chemical plant or a wastewater treatment plant in which process data can be acquired.

The plant 1 is configured to combust the fuel in a furnace 2, separate the circulation material from exhaust gas via a cyclone 3 that functions as a solid-gas separation device, and return the separated circulation material to the furnace 2 to be circulated. The separated circulation material is sent back to a lower part of the furnace 2 through a circulation material recovery pipe 4 connected to a part below the cyclone 3. A lower part of the circulation material recovery pipe 4 and the lower part of the furnace 2 are connected through a loop seal part 4a in which a flow path is narrowed. Accordingly, the lower part of the circulation material recovery pipe 4 is in a state where a predetermined amount of the circulation material is stored. The exhaust gas in which the circulation material is removed by the cyclone 3 is supplied to a rear flue 5 through an exhaust gas flow path 3a.

The boiler includes the furnace 2 for combusting the fuel and a heat exchanger for generating water vapor or the like using heat obtained by combustion. A fuel feed port 2a through which the fuel is supplied is provided in a middle part of the furnace 2. A gas outlet 2b through which combustion gas is exhausted is provided in an upper part of the furnace 2. The fuel that is supplied to the furnace 2 from a fuel supply device, not illustrated, is supplied to the inside of the furnace 2 through the fuel feed port 2a. In addition, a furnace wall pipe 6 for heating boiler feedwater is provided in a furnace wall of the furnace 2. The boiler feedwater that flows through the furnace wall pipe 6 is heated by combustion in the furnace 2.

In the furnace 2, a solid matter including the fuel supplied from the fuel feed port 2a is fluidized by air for combustion and fluidization introduced from an air supply line 2c in the lower part, and the fuel is combusted at, for example, approximately 800°C to 900°C while being fluidized. The combustion gas generated in the furnace 2 is introduced into the cyclone 3 with the circulation material. The cyclone 3 separates the circulation material and gas from each other based on a centrifugal effect, returns the separated circulation material to the furnace 2 through the circulation material recovery pipe 4, and sends the combustion gas in which the circulation material is removed to the rear flue 5 from the exhaust gas flow path 3a.

In the furnace 2, a part of the circulation material called an in-furnace bed material remains in a bottom part. The bed material may include a bed material having a coarse particle size not suitable for circulation and fluidization or an exhaust impurity. These bed materials, which are not suitable as the circulation material, may cause a fluidization failure. Thus, in order to suppress the fluidization failure, the in-furnace bed material is continuously or intermittently exhausted to the outside from an exhaust port 2d in the bottom part in the furnace 2. Metal or an unsuitable material having a coarse large particle size or the like is removed from the exhausted bed material on a circulation line, not illustrated. Then, the bed material is either supplied to the furnace 2 again or discarded. The circulation material of the furnace 2 circulates in a circulation system configured with the furnace 2, the cyclone 3, and the circulation material recovery pipe 4.

The rear flue 5 has a flow path through which the gas exhausted from the cyclone 3 flows to a rear stage. The rear flue 5 includes, as an exhaust heat collection unit that collects heat of the exhaust gas, a superheater 10 that generates superheated vapor, and a coal economizer 12 that preheats the boiler feedwater. The exhaust gas flowing through the rear flue 5 is cooled by exchanging heat with the vapor or the boiler feedwater flowing through the superheater 10 and the coal economizer 12. In addition, a steam drum 8 in which the boiler feedwater that has passed through the coal economizer 12 is stored is provided. The steam drum 8 is also connected to the furnace wall pipe 6.

The coal economizer 12 preheats the boiler feedwater by transferring the heat of the exhaust gas to the boiler feedwater. The coal economizer 12 is connected to a pump 7 by a pipe 21 and is connected to the steam drum 8 by a pipe 22. The boiler feedwater that is supplied to the coal economizer 12 from the pump 7 through the pipe 21 and that is preheated by the coal economizer 12 is supplied to the steam drum 8 through the pipe 22.

A downcast pipe 8a and the furnace wall pipe 6 are connected to the steam drum 8. The boiler feedwater in the steam drum 8 moves down through the downcast pipe 8a to be introduced into the furnace wall pipe 6 on a lower part side of the furnace 2 and then, flows toward the steam drum 8. The boiler feedwater in the furnace wall pipe 6 is heated by combustion heat generated in the furnace 2 and evaporates into vapor in the steam drum 8.

A saturated vapor pipe 8b through which the vapor inside the steam drum 8 is exhausted is connected to the steam drum 8. The saturated vapor pipe 8b connects the steam drum 8 to the superheater 10. The vapor in the steam drum 8 is supplied to the superheater 10 through the saturated vapor pipe 8b. The superheater 10 generates the superheated vapor by superheating the vapor using the heat of the exhaust gas. The superheated vapor is supplied to the turbine 100 outside the plant 1 through a pipe 10a and is used for power generation.

A pressure and a temperature of the vapor exhausted from the turbine 100 are lower than a pressure and a temperature of the vapor exhausted from the superheater 10. The pressure and the temperature of the vapor supplied to the turbine 100 are not particularly limited and are approximately 10 to 17 MPa and approximately 530°C to 570°C, respectively. The pressure and the temperature of the vapor exhausted from the turbine 100 are approximately 3 to 5 MPa and approximately 350°C to 400°C, respectively.

A condenser 102 is provided downstream of the turbine 100. The vapor exhausted from the turbine 100 is supplied to the condenser 102 to be condensed into saturated water in the condenser 102 and then, is supplied to the pump 7. A generator that converts kinetic energy obtained by rotation of the turbine 100 into electrical energy is connected to the turbine 100.

A pump 7a supplies makeup water in order to constantly maintain a water level of the condenser 102. In Fig. 1, a makeup water flow rate u1 (an example of a measurement value included in "process data") supplied by the pump 7a is illustrated.

The process data handled in the present embodiment is data related to operation of the plant 1 and may be referred to as operation data. For example, the process data may be data obtained by measuring a state of the plant 1 via a sensor and, more specifically, may include at least one measurement value such as a temperature, a pressure, and a flow rate of the plant 1. The process data may further include time information indicating a time when the at least one measurement value is obtained. In Fig. 1, a boiler feedwater flow rate u2 (an example of the measurement value included in the "process data") supplied to the coal economizer 12 from the pump 7 is illustrated. Furthermore, in Fig. 1, a boiler outlet vapor flow rate u3 (an example of the measurement value included in the "process data") supplied to the turbine 100 from the superheater 10 is illustrated, and a saturated vapor flow rate u4 (an example of the measurement value included in the "process data") supplied to the superheater 10 from the steam drum 8 is illustrated. The makeup water flow rate u1 may be controlled in accordance with the saturated vapor flow rate u4. In addition, the boiler feedwater flow rate u2 may be controlled in accordance with adjustment while both of the boiler outlet vapor flow rate u3 (or a superheated vapor flow rate) and a liquid surface level of the steam drum 8 are monitored.

In a case where a hole has occurred in a pipe system constituting the plant 1, the makeup water flow rate u1 rises, or a difference in flow rate between the boiler feedwater flow rate u2 and the boiler outlet vapor flow rate u3 is increased. A distributed control system (DCS) 20 receives the process data of the plant 1 such as the makeup water flow rate u1, the boiler feedwater flow rate u2, the boiler outlet vapor flow rate u3, and the saturated vapor flow rate u4 from the plant 1 to identify an operating status including operation ratios of the boiler and the turbine 100 constituting the plant 1 and to monitor whether or not abnormality has occurred in the plant 1.

While the makeup water flow rate u1, the boiler feedwater flow rate u2, the boiler outlet vapor flow rate u3, and the saturated vapor flow rate u4 are illustrated as the process data, the process data related to the plant 1 may be other data. The process data related to the plant 1 may be other data such as a temperature and a pressure or data calculated based on a plurality of pieces of the process data, or may be data that is acquired from the sensor or the like and that is not obtained by calculation processing.

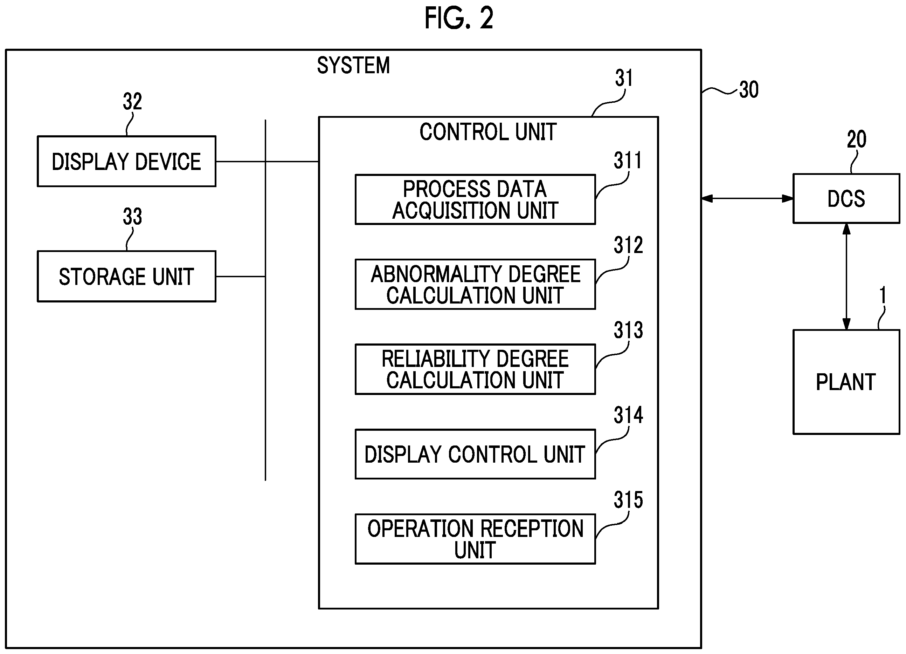

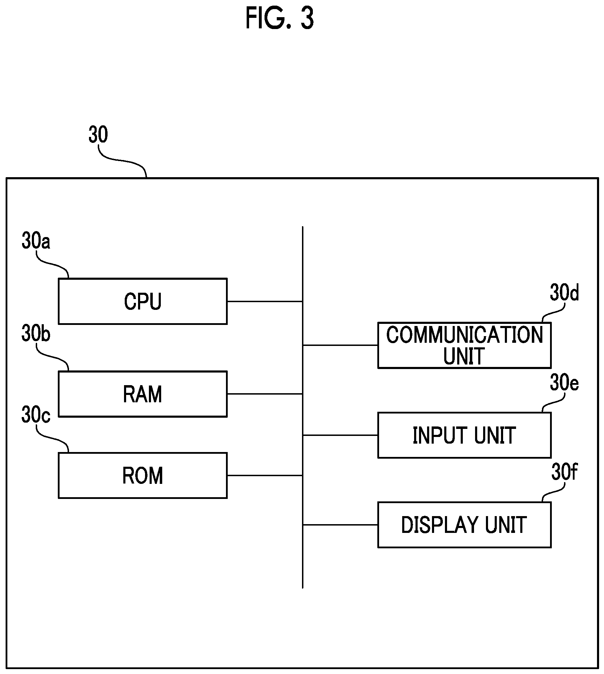

Next, a system 30 according to the present embodiment will be described using Fig. 2 and Fig. 3. Fig. 2 is a diagram illustrating functional blocks of the system 30 according to the present embodiment. Fig. 3 is a diagram illustrating a physical configuration of the system 30 according to the present embodiment.

The DCS 20 is a distributed control system for controlling the plant 1 and, as illustrated in Fig. 2, acquires the process data from the sensor or the like provided in the plant 1 and supplies a control signal for controlling the plant 1 based on the process data to the plant 1.

The system 30 includes a control unit 31, a display device 32, and a storage unit 33. The control unit 31 includes, for example, a process data acquisition unit 311, an abnormality degree calculation unit 312, a reliability degree calculation unit 313, a display control unit 314, and an operation reception unit 315.

The process data acquisition unit 311 acquires the process data from the DCS 20. The process data may include, for example, at least one measurement value of the plant 1 and the time information when the at least one measurement value is obtained. The process data acquisition unit 311, for example, may sequentially acquire the process data from the DCS 20 during the operation of the plant 1 or may collectively acquire the process data measured during an operation time period after the operation of the plant 1. The process data acquisition unit 311 stores the acquired process data in the storage unit 33. The process data acquisition unit 311 may execute predetermined preprocessing with respect to the process data acquired from the DCS 20. The predetermined preprocessing is not particularly limited and may include, for example, signal selection of selecting a signal satisfying a predetermined condition, noise removal of removing noise via a filter having a predetermined intensity, and diagnosis mode determination of detecting a case of the process data satisfying a predetermined condition.

The abnormality degree calculation unit 312 is an example of a first index value calculation unit and calculates an abnormality degree based on the process data. Specifically, the abnormality degree calculation unit 312 calculates the abnormality degree based on at least one measurement value included in the process data. Here, the abnormality degree is an example of a first index value related to operation of target equipment and is an index indicating a degree of abnormality in the operation of the plant 1. For example, the abnormality degree may be a degree to which a signal related to a critical failure is different from a normal signal. A specific example of the abnormality degree is considered to be, but not limited to, a Mahalanobis distance between "normal " and "during evaluation" with respect to the signal related to the critical failure. The abnormality degree calculation unit 312 may calculate the abnormality degree by taking into consideration an operation condition in order to prevent erroneous reporting of a change in tendency caused by a change in the operation condition. The first index value is not limited to the abnormality degree and may be any index value related to the operation of the target equipment such as the plant 1.

The reliability degree calculation unit 313 is an example of a second index value calculation unit and calculates a reliability degree based on the process data. Specifically, the reliability degree calculation unit 313 calculates the reliability degree based on at least one measurement value included in the process data. Here, the reliability degree is an example of a second index value related to the operation of the target equipment and is an index indicating a level of reliability of the above abnormality degree. For example, the reliability degree may be an index value indicating a level of reliability of the process data or an algorithm used for calculating the abnormality degree. For example, the reliability degree may be a degree to which a signal related to the operation condition is the same as a normal signal. A specific example of the reliability degree is considered to be, but not limited to, a Mahalanobis distance between "normal " and "during evaluation" with respect to the signal related to the operation condition. The second index value is not limited to the reliability degree and may be an index value indicating a level of reliability of the first index value (an index value indicating a level of reliability of the process data or the algorithm used for calculating the first index value).

The display control unit 314 generates display data based on the acquired process data and on various indexes calculated based on the process data, and displays a display screen based on the display data on the display device 32. The display control unit 314 may display, for example, a coordinate space defined by an axis denoting the first index value and by an axis denoting the second index value and a representative point of the process data in the coordinate space on the display device 32. The display control unit 314 may further display the time information associated with the process data on the display device 32 in association with the representative point. The display control unit 314 may further display a region divided by a boundary in the coordinate space on the display device 32. The display control unit 314 may further display a temporal change of the representative point in the coordinate space on the display device 32. The temporal change of the representative point may have a discrete aspect or a continuous aspect. As the discrete aspect, a plurality of representative points associated with a plurality of pieces of time information, respectively, may be illustrated in the coordinate space. In addition, as the continuous aspect, a continuous line diagram illustrating a temporal path of the representative point within a predetermined range related to the time information (from a predetermined start time to a predetermined end time) may be illustrated in the coordinate space. The display control unit 314 may further display a time-series graph of the first index value and/or the second index value on the display device 32. The display control unit 314 may further display a time-series graph of the process data (feature amount) used for calculating the first index value and/or the second index value on the display device 32. In a case where the operation reception unit 315 receives selection of the time information made by an operator, the display control unit 314 may display the representative point of the process data associated with the time information on the display device 32.

The operation reception unit 315 is an example of a reception unit and receives any operation performed by the operator through an input unit 30e. Content of the operation is not particularly limited and may include, for example, selection of the time information made by the operator.

The display device 32 is configured with, for example, a display unit 30f, described later, and displays various display screens including information related to the operation of the plant 1 based on the display data supplied by the display control unit 314. Various display screens displayed by the display device 32 will be described later.

The storage unit 33 stores the above process data and reference data of the plant 1. Here, the reference data is data for preventing erroneous reporting caused by seasonality or by a change over years. Usefulness of the reference data may be evaluated by, for example, the control unit 31 of the system 30. The reference data stored in the storage unit 33 may be periodically updated by the control unit 31 of the system 30.

As illustrated in Fig. 3, the system 30 physically includes a central processing unit (CPU) 30a, a random access memory (RAM) 30b, a read only memory (ROM) 30c, a communication unit 30d, the input unit 30e, and the display unit 30f. These configurations are connected to each other to be capable of transmitting and receiving data through a bus. Each functional block of the system 30 illustrated in Fig. 2 is implemented by the physical configurations illustrated in Fig. 3.

While a case where the system 30 is configured with one computer will be described in the present embodiment, the system 30 may be implemented by a combination of a plurality of computers. For example, in addition to the display unit 30f, a display constituting a different display unit for displaying other information may be provided. In addition, the system 30 may be configured with a tablet terminal. By configuring the system 30 with a tablet terminal, it is possible to carry the system 30. For example, it is possible to use the system 30 while moving around in the plant 1. In addition, the configurations illustrated in Fig. 3 are merely an example. The system 30 may have a configuration other than the configurations or may not have a part of the configurations. In addition, a part of the configurations may be provided at a remote location. For example, the control unit 31 including the CPU 30a and the like may be provided at a remote location. In this case, the display device 32 including the display unit 30f and the like may be configured to acquire a control signal generated in the control unit 31 provided at the remote location through a network.

The CPU 30a is a calculation unit that performs a control related to execution of a program stored in the RAM 30b or in the ROM 30c, and calculation and processing of data. The CPU 30a is a calculation unit that executes a program (monitoring program) for displaying a graph and a description of the process data of the plant 1. The CPU 30a receives various types of data from the input unit 30e or from the communication unit 30d and displays a calculation result of data on the display unit 30f or stores the calculation result in the RAM 30b.

In the storage unit, data can be rewritten in the RAM 30b. For example, the RAM 30b may be configured with a semiconductor storage element such as a DRAM or an SR_AM. The RAM 30b may store the program executed by the CPU 30a and data such as the process data of the plant 1. The program and the data are merely an example, and the RAM 30b may store data other than the program and the data or may not store a part of the program and the data.

In the storage unit, data can be read out from the ROM 30c. For example, the ROM 30c may be configured with a semiconductor storage element such as a flash memory or with an HDD. The ROM 30c may store, for example, a computer program for executing various types of processing illustrated in the present embodiment and data that is not rewritten. The data that is not rewritten includes, for example, information related to the plant 1 and to specifications of components of the plant 1. In addition, the ROM 30c may store, for example, data such as the process data of the plant 1, indexes (an operation ratio, efficiency, and the like) related to the operation of the plant 1, and a planned stoppage period.

The communication unit 30d is an interface that connects the system 30 to other equipment. The communication unit 30d may be connected to a communication network such as the Internet.

The input unit 30e receives input of data corresponding to operations performed by the operator and may include, for example, a keyboard and a touch panel.

The display unit 30f has a screen on which the calculation result of the CPU 30a is visually displayed, and may be configured with, for example, a liquid crystal display (LCD). The display unit 30f may display the graph and the description of the process data. In addition, the display unit 30f may be provided by connecting a plurality of displays to configure one screen.

The computer program for executing various types of processing illustrated in the present embodiment may be provided as being stored in a computer-readable storage medium such as the ROM 30c or may be provided through the communication network connected by the communication unit 30d. In the system 30, various operations included in the present embodiment are implemented by executing the monitoring program via the CPU 30a. These physical configurations are merely an example and may not be independent configurations. For example, the system 30 may include a large-scale integration (LSI) in which the CPU 30a is integrated with the RAM 30b or with the ROM 30c.

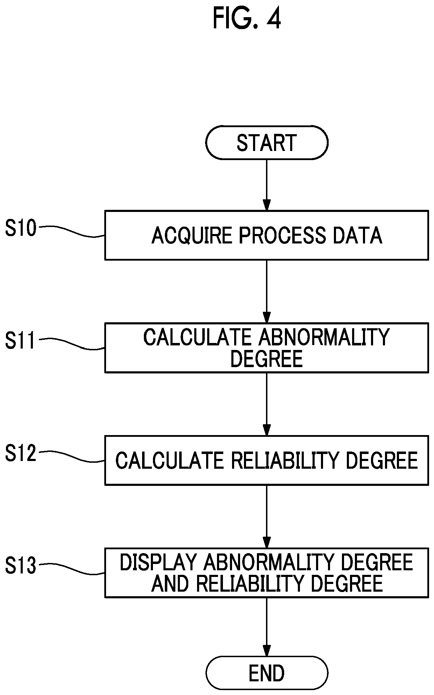

Next, operation processing of the system 30 according to the present embodiment will be described using Fig. 4. Fig. 4 is a flowchart illustrating an example of the operation processing. The content and order of steps illustrated below are merely an example, and the operation processing is not limited thereto.

(S10) First, the process data acquisition unit 311 acquires the process data of the plant 1 from the DCS 20. The process data may include, for example, at least one measurement value of the plant 1 and the time information when the at least one measurement value is obtained. A timing when the process data acquisition unit 311 acquires the process data is not particularly limited and may be, for example, during the operation of the plant 1. Alternatively, the process data acquisition unit 311 may collectively acquire the process data measured during the operation time period after the operation of the plant 1. The process data acquisition unit 311 may store the process data acquired from the DCS 20 in the storage unit 33. The process data acquisition unit 311 may execute the predetermined preprocessing with respect to the process data acquired from the DCS 20. The predetermined preprocessing is not particularly limited and may include, for example, the signal selection, the noise removal, and the diagnosis mode determination.

(S11) Next, the abnormality degree calculation unit 312 calculates the abnormality degree based on the acquired process data. Specifically, the abnormality degree calculation unit 312 calculates the abnormality degree based on at least one measurement value included in the process data. Accordingly, the abnormality degree associated with the time information included in the process data is calculated. The abnormality degree calculation unit 312 may take into consideration the reference data stored in the storage unit 33 in calculating the abnormality degree. Accordingly, erroneous reporting caused by seasonality or by a change over years is prevented.

(S12) Next, the reliability degree calculation unit 313 calculates the reliability degree based on the acquired process data. Specifically, the reliability degree calculation unit 313 calculates the reliability degree based on at least one measurement value included in the process data. Accordingly, the reliability degree associated with the time information included in the process data is calculated. The reliability degree calculation unit 313 may take into consideration the reference data stored in the storage unit 33 in calculating the reliability degree. Accordingly, erroneous reporting caused by seasonality or by a change over years is prevented.

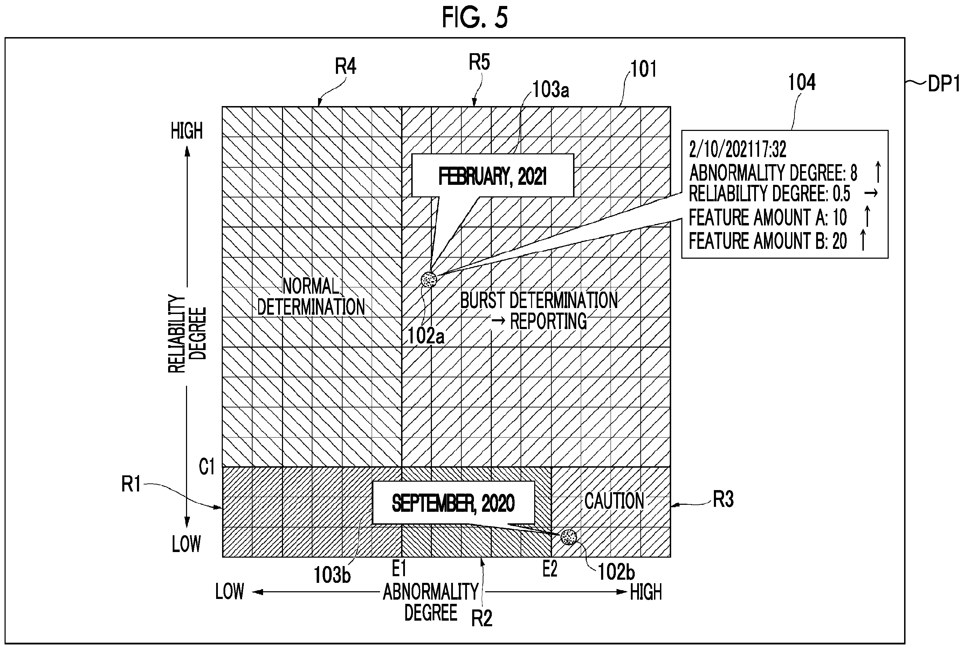

(S13) Next, the display control unit 314 displays a predetermined screen on the display device 32 based on the calculated abnormality degree, the calculated reliability degree, and the like. The display control unit 314 may update content of the screen to be displayed on the display device 32 based on the operation of the operator received by the operation reception unit 315. Hereinafter, the predetermined screen will be described with reference to Figs. 5 to 7.

Fig. 5 is a diagram illustrating an example of the screen displayed on the display device 32 according to the present embodiment. In Fig. 5, a screen DP1 is illustrated as an example of the screen displayed on the display device 32. The screen DP1 is displayed on the display device 32 based on, for example, the display data generated by the display control unit 314 of the system 30.

The screen DP1 may include the coordinate space defined by the axis denoting the abnormality degree and by the axis denoting the reliability degree. In the example illustrated in Fig. 5, a coordinate space 101 defined by the axis denoting the abnormality degree and by the axis denoting the reliability degree is displayed on the screen DP1. A horizontal axis of the coordinate space 101 corresponds to the abnormality degree, and a vertical axis of the coordinate space 101 corresponds to the reliability degree.

The screen DP1 may include the representative point of the process data in the coordinate space. The representative point of the process data is disposed at a position corresponding to each of the abnormality degree and the reliability degree calculated based on the process data in the coordinate space. In the example illustrated in Fig. 5, two plots of plots 102a and 102b are illustrated on the screen DP1. For example, the plot 102a is the representative point of the process data associated with specific time information. A position of the plot 102a on the horizontal axis corresponds to a position of the abnormality degree calculated based on the process data. In addition, a position of the plot 102a on the vertical axis corresponds to a position of the reliability degree calculated based on the process data. In addition, for example, the plot 102b is the representative point of the process data associated with another time information different from the time information corresponding to the plot 102a. A position of the plot 102b on the horizontal axis corresponds to the position of the abnormality degree calculated based on the process data. In addition, a position of the plot 102b on the vertical axis corresponds to the position of the reliability degree calculated based on the process data.

The screen DP1 may include the time information associated with the process data as a base of the plot in association with each plot displayed in the coordinate space. In the example illustrated in Fig. 5, time information 103a represented by a text "February, 2021" is displayed in the coordinate space 101 in association with the plot 102a. That is, the time information associated with the process data as a base of the plot 102a is "February, 2021". Similarly, time information 103b represented by a text "September, 2020" is displayed in the coordinate space 101 in association with the plot 102b. That is, the time information associated with the process data as a base of the plot 102b is "September, 2020".

The screen DP1 may include at least one region divided by any boundary in the coordinate space. The region may be defined by, for example, magnitude of a value of the abnormality degree and/or the reliability degree. In the example illustrated in Fig. 5, the coordinate space 101 includes five regions R1 to R5. The regions R1 to R5 are defined by thresholds E1 and E2 for the abnormality degree and by a threshold C1 for the reliability degree. For example, in a case where the abnormality degree is denoted by a variable "e" and the reliability degree is denoted by a variable "c", the region R1 is defined as a region of "e < E1" and "c < C1", and the region R2 is defined as a region of "E1 ≤ e < E2" and "c < C1". Similarly, the region R3 is defined as a region of "E2 < e" and "c < C1", the region R4 is defined as a region of "e < E1" and "C1 ≤ c", and the region R5 is defined as a region of "E1 ≤ e" and "C1 ≤ c". How the regions are divided is not limited to the above example and may be defined by any boundary defined on the coordinate space. The boundary is not limited to a straight line and may be a curved line.

A predetermined determination reference may be displayed on the screen DP1 in the aspect of being associated with each region. Here, the determination reference may be a determination reference that is defined as conditions for the abnormality degree and for the reliability degree and that is related to an operation state of the plant 1. Any determination reference can be set in advance by a manager or the like. In the example illustrated in Fig. 5, a text "caution" is displayed as the determination reference associated with the region R3, a text "normal determination" is displayed as the determination reference associated with the region R4, and a text "alert determination → reporting" is displayed as the determination reference associated with the region R5.

In a case where, for example, the operator performs an operation of selecting any plot, information related to the plot may be displayed on the screen DP1. The information related to the plot is not particularly limited and may include, for example, the time information associated with the plot, the first index value, the second index value, any feature amount, and information indicating a trend of a change in this information. Here, the feature amount may be the process data used for calculating the first index value or the second index value.

In the example illustrated in Fig. 5, a tooltip 104 is extending from the plot 102a. The tooltip 104 may be displayed as a pop-up in a case where, for example, the operator performs an operation of selecting the plot 102a. The tooltip 104 includes time information "2021/2/10 17:32", an abnormality degree "8" and its trend "↑" (tendency to increase), a reliability degree "0.5" and its trend "→" (tendency to remain unchanged), a feature amount A "10" and its trend "↑", and a feature amount B "20" and its trend "↑", as information related to the plot 102a. Accordingly, by displaying not only the abnormality degree and the reliability degree related to the plot but also other information (feature amount), the operator can easily check required information, and a load of making a decision is reduced.

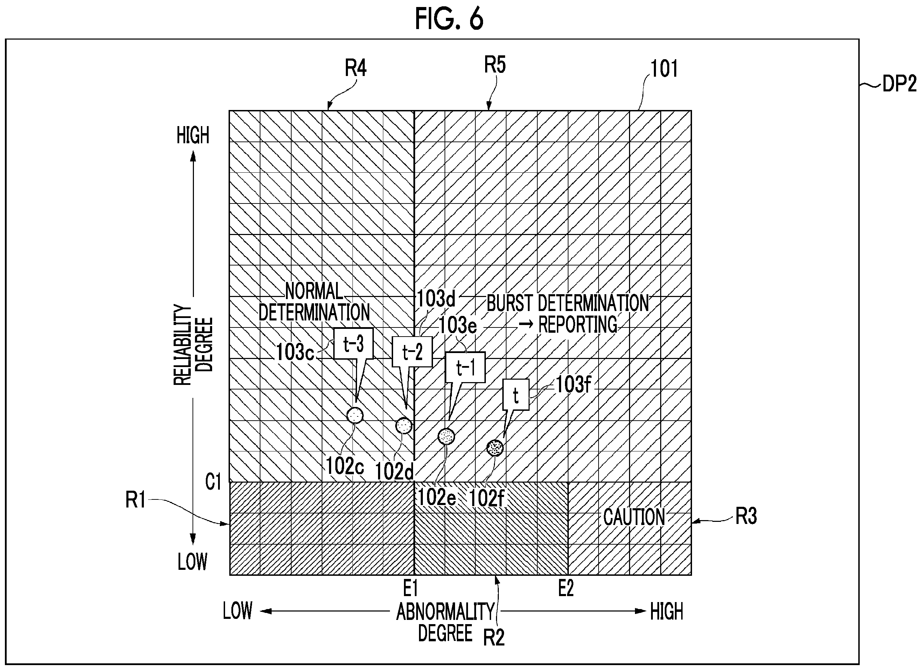

Fig. 6 is a diagram illustrating another example of the screen displayed on the display device 32 according to the present embodiment. In Fig. 6, a screen DP2 is illustrated as an example of the screen displayed on the display device 32. The screen DP2 is displayed on the display device 32 based on, for example, the display data generated by the display control unit 314 of the system 30.

The screen DP2 may include the temporal change of the representative point of the process data in the coordinate space defined by the axis denoting the abnormality degree and by the axis denoting the reliability degree. In the example illustrated in Fig. 6, the coordinate space 101 defined by the axis denoting the abnormality degree and by the axis denoting the reliability degree is displayed on the screen DP2. Furthermore, plots 102c, 102d, 102e, and 102f and time information 103c, 103d, 103e, and 103f associated with the plots, respectively, are displayed in the coordinate space 101. Here, in the example illustrated in Fig. 6, the time information 103c is "t - 3", the time information 103d is "t - 2", the time information 103e is "t - 1", and the time information 103f is "t". Accordingly, it is shown that the representative point of the process data is temporally sequentially represented as the plots 102c, 102d, 102e, and 102f.

An aspect of each plot such as the plots 102c, 102d, 102e, and 102f may change based on the corresponding time information. Particularly, regarding the aspect of the plot, the aspect may change in accordance with the region defined on the coordinate space. In the example illustrated in Fig. 6, color densities of the plots 102c, 102d, 102e, and 102f are sequentially increased. The present invention is not limited to the example illustrated in Fig. 6. For example, the aspect of the plot such as a shape, a size, and a color shade may be changed as the corresponding time information is newer. While the temporal change of the representative point of the process data may be indicated by a plurality of discrete plots as illustrated in Fig. 6, the present invention is not limited thereto. For example, a continuous line diagram illustrating a temporal path of the representative point may be displayed.

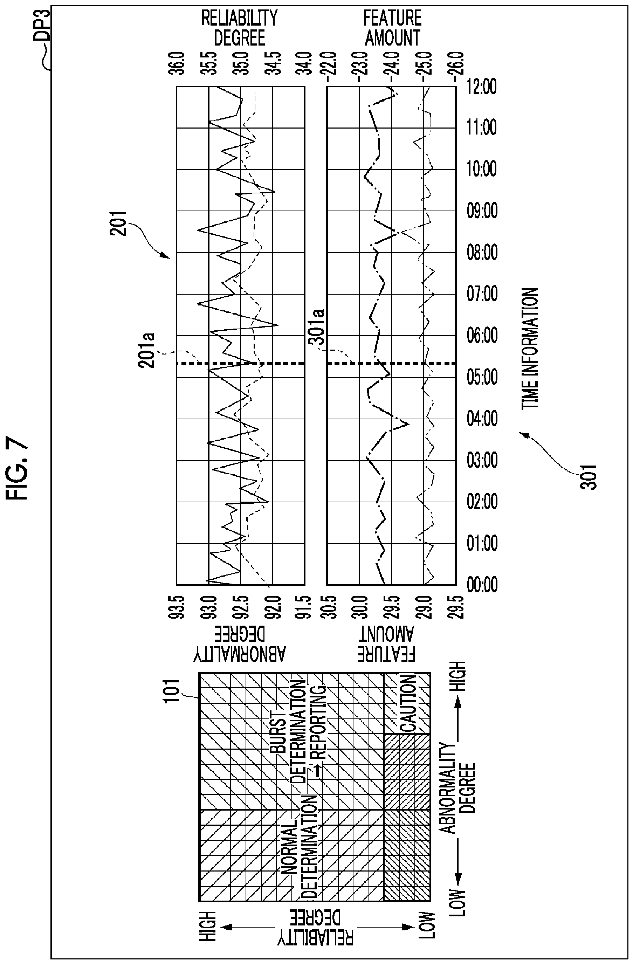

Fig. 7 is a diagram illustrating another example of the screen displayed on the display device 32 according to the present embodiment. In Fig. 7, a screen DP3 is illustrated as an example of the screen displayed on the display device 32. The screen DP3 is displayed on the display device 32 based on, for example, the display data generated by the display control unit 314 of the system 30.

The screen DP3 may include a time-series graph of the abnormality degree/reliability degree and a time-series graph of the feature amount in addition to the coordinate space defined by the axis denoting the abnormality degree and by the axis denoting the reliability degree. In the example illustrated in Fig. 7, the coordinate space 101 defined by the axis denoting the abnormality degree and by the axis denoting the reliability degree is displayed on the screen DP3. Furthermore, an abnormality degree/reliability degree time-series graph 201 is included on a right side of the coordinate space 101. The abnormality degree/reliability degree time-series graph 201 is a graph illustrating time-series changes of the abnormality degree and the reliability degree. In the abnormality degree/reliability degree time-series graph 201, a horizontal axis and a vertical axis denote the time information and the abnormality degree/reliability degree, respectively. In the abnormality degree/reliability degree time-series graph 201, a solid line indicates the time-series change of the abnormality degree, and a dotted line indicates the time-series change of the reliability degree. In the abnormality degree/reliability degree time-series graph 201, a dotted line 201a corresponding to specific time information is illustrated. In a case where the operator selects any time information on the abnormality degree/reliability degree time-series graph 201, the dotted line 201a corresponding to the selected time information may be illustrated in the abnormality degree/reliability degree time-series graph 201. Furthermore, in accordance with the selection, the representative point of the process data corresponding to the selected time information may be displayed in the coordinate space 101.

In the example illustrated in Fig. 7, a feature amount time-series graph 301 is further illustrated on a lower side of the abnormality degree/reliability degree time-series graph 201 in the screen DP3. The feature amount time-series graph 301 is a graph illustrating a time-series change of the feature amount. In the feature amount time-series graph 301, a horizontal axis and a vertical axis denote the time information and the abnormality degree/reliability degree, respectively. In the feature amount time-series graph 301, a dot-dashed line indicates the time-series change of one feature amount, and a double dot-dashed line indicates the time-series change of another feature amount. In the feature amount time-series graph 301, a dotted line 301a corresponding to specific time information is illustrated. In a case where the operator selects any time information on the feature amount time-series graph 301, the dotted line 301a corresponding to the selected time information may be illustrated in the feature amount time-series graph 301. Furthermore, in accordance with the selection, the representative point of the process data corresponding to the selected time information may be displayed in the coordinate space 101.

Aspects described through the above embodiment can be combined, changed, or improved to be used in accordance with their application, as appropriate. The present invention is not limited to the disclosure of the embodiment. It is apparent from the disclosure of the claims that such combined, changed, or improved embodiments may also fall within the technical scope of the present invention.

### Reference Signs List

- 1: Plant
- 2: Furnace
- 2a: Fuel feed port
- 2b: Gas outlet
- 2c: Air supply line
- 2d: Exhaust port
- 3: Cyclone
- 3a: Exhaust gas flow path
- 4: Circulation material recovery pipe
- 4a: Loop seal part
- 5: Rear flue
- 6: Furnace wall pipe
- 7: Pump
- 7a: Pump
- 8: Steam drum
- 8a: Downcast pipe
- 8b: Saturated vapor pipe
- 10: Superheater
- 10a: Pipe
- 12: Coal economizer
- 21: Pipe
- 22: Pipe
- 30: System
- 30a: CPU
- 30d: Communication unit
- 30e: Input unit
- 30f: Display unit
- 31: Control unit
- 311: Process data acquisition unit
- 312: Abnormality degree calculation unit
- 313: Reliability degree calculation unit
- 314: Display control unit
- 315: Operation Reception unit
- 32: Display device
- 33: Storage unit
- 100: Turbine
- 102: Condenser

## Claims

1. An information processing device comprising:
a data acquisition unit that acquires process data of target equipment;
a first index value calculation unit that calculates a first index value related to operation of the target equipment based on the process data;
a second index value calculation unit that calculates a second index value related to the operation of the target equipment based on the process data; and
a display control unit that displays a coordinate space defined by an axis denoting the first index value and by an axis denoting the second index value and a representative point of the process data in the coordinate space on a display unit.

2. The information processing device according to claim 1,
wherein the display control unit further displays time information associated with the process data on the display unit in association with the representative point.

3. The information processing device according to claim 1 or 2,
wherein the display control unit further displays a region divided by a boundary in the coordinate space on the display unit.

4. The information processing device according to any one of claims 1 to 3,
wherein the display control unit further displays a temporal change of the representative point in the coordinate space on the display unit.

5. The information processing device according to any one of claims 1 to 4,
wherein the display control unit further displays a time-series graph of the first index value and/or the second index value on the display unit.

6. The information processing device according to any one of claims 1 to 5, further comprising:
a reception unit that receives selection of time information of the process data,
wherein the display control unit displays the representative point of the process data associated with the time information related to the selection received by the reception unit on the display unit.

7. A display device displaying:
a coordinate space defined by an axis denoting a first index value related to operation of target equipment calculated based on process data of the target equipment and by an axis denoting a first index value related to the operation of the target equipment calculated based on the process data of the target equipment; and
a representative point of the process data in the coordinate space.

8. An information processing method comprising:
via an information processing device,
acquiring process data of target equipment;
calculating a first index value related to operation of the target equipment based on the process data;
calculating a second index value related to the operation of the target equipment based on the process data; and
displaying a coordinate space defined by an axis denoting the first index value and by an axis denoting the second index value and a representative point of the process data in the coordinate space on a display unit.

9. A program causing an information processing device to function as:
a data acquisition unit that acquires process data of target equipment;
a first index value calculation unit that calculates a first index value related to operation of the target equipment based on the process data;
a second index value calculation unit that calculates a second index value related to the operation of the target equipment based on the process data; and
a display control unit that displays a coordinate space defined by an axis denoting the first index value and by an axis denoting the second index value and a representative point of the process data in the coordinate space on a display unit.
